# EUROPEAN PATENT APPLICATION

(11) **EP 1 716 913 A2**
(43) Date of publication of application: **02.11.2006**
(21) Application number: 06008528.9
(22) Date of filing: 25.04.2006
(51) Int. Cl.: B01D 53/94, B01J 23/63

(54) **Diesel particulate filter**

(30) Priority: 27.04.2005 JP 2005130018; 17.01.2006 JP 2006008592
(71) Applicant: Mazda Motor Corporation, Aki-gun, Hiroshima 730-8670 (JP)
(72) Inventor: Harada, Koichiro, Fuchu-cho, Aki-gun, Hiroshima 730-8670 (JP); Tsushio, Yoshinori, Fuchu-cho, Aki-gun, Hiroshima 730-8670 (JP); Takami, Akihide, Fuchu-cho, Aki-gun, Hiroshima 730-8670 (JP)
(74) Representative: Laufhütte, Dieter

(57) **Abstract**

The present invention is intended to configure a diesel particulate filter to allow the burning rate of particulates to increase even with a small amount of catalytic metal or even without using any catalytic metal. In the diesel particulate filter, walls forming exhaust gas channels in a filter body on which the particulates are trapped are coated with a catalyst layer for promoting the burning of the trapped particulates. The catalyst layer contains a mixed oxide in which Ce, Zr and a rare earth element R other than Ce are contained in a Ce/(Ce+Zr) mole ratio between 10% and 90% both inclusive or between 20% exclusive and 80% inclusive.

## Description

### BACKGROUND OF THE INVENTION

### (a) Field of the Invention

This invention relates to diesel particulate filters.

### (b) Description of the Related Art

Active developments have been made recently in techniques for trapping particulates (fine particulate matter, especially carbon particulates) exhausted from a diesel engine on a filter and burning off the trapped particulates.

A known typical example of the techniques is a technique in which an oxidation catalyst is disposed in an exhaust flow upstream of a diesel particulate filter (hereinafter, referred to as a DPF) and HC constituents in fuel or the like are supplied to the oxidation catalyst. Specifically, the oxidation catalyst burns HC constituents to raise the temperature of exhaust gas flowing into the DPF and oxidizes NO in the exhaust gas to NO₂, and the DPF then burns off particulates in the DPF using the exhaust gas raised in temperature and NO₂. In this case, NO₂ acts as an oxidizing agent for burning the particulates.

Another known typical example is a technique in which a NOx trap catalyst is disposed in an exhaust flow upstream of a DPF and an oxidation catalyst material for particulates is coated on the wall surfaces of exhaust gas channels in the DPF. The reason for this structure is that since it cannot be expected to oxidize particulates using NO₂ while having the advantage of removing NOx in the exhaust gas, the oxidation catalyst material is placed in the DPF. An oxidation catalyst material commonly used contains a catalytic metal such as Pt, cerium dioxide or a Ce-Zr mixed oxide, and active alumina.

In this case, although burning of particulates is promoted as the amount of catalytic metal in the oxidation catalyst material coated on the DPF is increased, the promoting effect due to increase in the amount of catalytic metal does not last so long. The reason is that during the burning of particulates, the catalyst temperature rises to 800°C or more, to about 1000°C in some cases, which leads to sintering of the catalytic metal.

To cope with this, Japanese Unexamined Patent Publication No. 2002-292246 proposes to employ as the oxidation catalytic material for the DPF a mixture of a cerium-based mixed oxide having oxygen storage capacity and a perovskite or spinel mixed oxide to lower the ignition temperature of particulates. Alternatively, Japanese Unexamined Patent Publication No. 2004-42021 proposes to employ as the oxidation catalytic material for the DPF ceria or a mixed oxide of Ce and another rare earth element, each stabilized by Ag or Co and including no platinoid element.

However, ceria and Ce-Zr mixed oxides are low in the burning rate of particulates when they carry no catalytic metal and conventional mixed oxides of Ce and another rare earth element do not always have high particulate burning rates. This tendency is particularly pronounced when a NOx trap catalyst is disposed in the exhaust flow upstream of the DPF, because NO₂ cannot be used for oxidation of particulates. If, as in such cases, particulates in the DPF cannot be promptly burned off, this increases the back pressure of the engine, resulting in deteriorated fuel economy. Therefore, it is a reality that the amount of catalytic metal such as Pt cannot help but be increased. In this case, however, the catalyst cannot obtain sufficient thermal resistance because of the above sintering problem. Further, even if the technique is employed in which an oxidation catalyst is disposed upstream of the DPF to supply fuel (HC constituents) to the oxidation catalyst and thereby raise the exhaust gas temperature, the fuel supply deteriorates fuel economy.

### SUMMARY OF THE INVENTION

With the foregoing in mind, the present invention solves the above problems by configuring a diesel particulate filter to allow the burning rate of particulates to increase even with a small amount of catalytic metal or even without using any catalytic metal.

As a result of the inventors' experiments and studies on the relation between the composition and the particulate burning rate of Ce-based mixed oxide acting as an oxygen storage component, the inventors have found that CO in the exhaust gas becomes easy to oxidize at a particular composition of the mixed oxide and the reaction heat of the oxidation promotes the burning of particulates and provides prompt burning of particulates even at a small or zero amount of catalytic metal, thereby completing the present invention.

More specifically, a first solution of the present invention is directed to a diesel particulate filter, disposed in an exhaust passage of an engine, for trapping particulates exhausted from the engine, wherein
walls forming exhaust gas channels in a filter body on which the particulates are trapped are coated with a catalyst layer for promoting the burning of the trapped particulates,
the catalyst layer contains a mixed oxide in which Ce and Zr are contained in a Ce/(Ce+Zr) mole ratio between 20% exclusive and 80% inclusive, and
the mixed oxide further contains a rare earth element R other than Ce.

Although evaluation data will be described later, the inventors' experiments show the following aspects: The Ce-Zr mixed oxide containing Ce and Zr increases the particulate burning rate with increasing Ce/(Ce+Zr) mole ratio, exhibits a peak at a Ce/(Ce+Zr) mole ratio between 50% and slightly over 60% and then decreases with increasing Ce/(Ce+Zr) mole ratio; Further, when the Ce/(Ce+Zr) mole ratio is between 20% exclusive and 80% inclusive, the Ce-Zr mixed oxide obviously exhibits higher particulate burning rate than CeO₂ and ZrO₂ even after subjected to heat aging. The reason can be believed to be that since the Ce-Zr mixed oxide has not only oxygen storage capacity but also high thermal resistance, the oxygen storage capacity is less deteriorated so that oxygen can be sufficiently supplied as an oxidizing agent during the burning of particulates.

For the CeZrR-type mixed oxide containing Ce, Zr and a rare earth element R in the above mole ratio range, it exhibits significantly larger particulate burning rate than the Ce-Zr mixed oxide carrying catalytic metal even if it carries no catalytic metal.

The reason for this can be believed to be that the rare earth element R not only acts to thermally stabilize the mixed oxide but also, as will be obvious from the later-described FT-IR data, effectively acts to oxidize CO in the exhaust gas and the oxidation reaction heat of CO promotes the burning of particulates. Therefore, even if a NOx trap catalyst is disposed in the exhaust gas passage upstream of the DPF, particulates on the DPF can be efficiently burned off.

Hence, the back pressure of the engine can be prevented from being increased, or the amount of fuel (HC constituents) supply can be reduced when an oxidation catalyst is disposed upstream of the DPF. This is advantageous in improving fuel economy. Further, even when a NOx trap catalyst is disposed in the exhaust passage upstream of the DPF, particulates on the DPF can be efficiently burned off and the thermal resistance is improved. Therefore, the particulate burning performance can be maintained over a long period of time.

A catalytic metal may be carried on the above mixed oxide. A preferable catalytic metal used is a platinoid element such as Pt, Pd or Rh and Pt is particularly preferably used. The amount of catalytic metal carried is not particularly limited but may be approximately 2 mass% or less.

A second solution of the invention is characterized in that in the first solution, the rare earth element R comprises at least one of La and Nd.

The CeZrR-type mixed oxide containing La or Nd can also have a high particulate burning rate. The Ce-Zr mixed oxide can have an excellent effect particularly when it further contains La or Nd as a rare earth element.

A third solution of the invention is characterized in that in the first or second solution, the mixed oxide has an R/(Ce+Zr+R) mole ratio between 2% and 11% both inclusive.

Although the rare earth element R can increase the particulate burning rate as described above, the later-described experimental results show that when the mole ratio of R becomes large, the effect of increasing the particulate burning rate cannot be exhibited. Therefore, it is preferable that the R/(Ce+Zr+R) mole ratio is between 2% and 11 % both inclusive.

A fourth solution of the invention is characterized in that in the first solution,
the rare earth element R is La,
the mixed oxide has a La/(Ce+Zr+La) mole ratio between 2% and 11% both inclusive, and
a catalytic metal is carried in the range of 0 mass% to 2 mass% on the mixed oxide.

When La is used as the rare earth element and the La/(Ce+Zr+La) mole ratio is in the above range, this is advantageous in increasing the particulate burning rate. As a result, even if the amount of catalytic metal carried is small or zero, the expected effect can be obtained. If the catalytic metal is carried on the mixed oxide, the amount thereof carried is preferably 2 mass% or less. In this case, the dispersity of the catalytic metal becomes high, which is advantageous in restraining the sintering of the catalytic metal and maintaining the effect of burning off particulates over a long period of time. A preferable catalytic metal used is a platinoid element such as Pt, Pd or Rh and Pt is particularly preferable.

A fifth solution of the invention is directed to a diesel particulate filter, disposed in an exhaust passage of an engine, for trapping particulates exhausted from the engine, wherein
walls forming exhaust gas channels in a filter body on which the particulates are trapped are coated with a catalyst layer for promoting the burning of the trapped particulates,
the catalyst layer contains a mixed oxide in which Ce and Zr are contained in a Ce/(Ce+Zr) mole ratio between 10% exclusive and 90% inclusive, and
the mixed oxide further contains Pr.

The inventors' experiments showed that Ce-Zr-Pr mixed oxide has high particulate burning rate. Therefore, if the Ce-Zr mixed oxide contains Pr even if the Ce/(Ce+Zr) mole ratio is between 10% and 90% both inclusive, it can promptly burn off particulates. Hence, the back pressure of the engine can be prevented from being increased, or the amount of fuel (HC constituents) supply can be reduced when an oxidation catalyst is disposed upstream of the DPF. This is advantageous in improving fuel economy. Further, even when a NOx trap catalyst is disposed in the exhaust passage upstream of the DPF, particulates on the DPF can be efficiently burned off and the thermal resistance is improved. Therefore, the particulate burning performance can be maintained over a long period of time.

A catalytic metal may be carried on the above mixed oxide. A preferable catalytic metal used is a platinoid element such as Pt, Pd or Rh and Pt is particularly preferably used. The amount of catalytic metal carried is not particularly limited but may be approximately 2 mass% or less.

A sixth solution of the invention is characterized in that in the fifth solution, the Ce/(Ce+Zr) mole ratio is between 20% exclusive and 11 % inclusive.

This is advantageous in maintaining the particulate burning performance on the DPF over a long period of time.

A seventh solution of the invention is characterized in that in the fifth solution or the sixth solution, the mixed oxide has a Pr/(Ce+Zr+Pr) mole ratio between 2% and 11% both inclusive.

In the seventh solution, it is advantageous to increase the particulate burning rate.

An eighth solution of the invention is directed to a diesel particulate filter, disposed in an exhaust passage of an engine, for trapping particulates exhausted from the engine, wherein
walls forming exhaust gas channels in a filter body on which the particulates are trapped are coated with a catalyst layer for promoting the burning of the trapped particulates, and
the catalyst layer contains a mixed oxide in which Ce and Pr are contained in a Ce/(Ce+Pr) mole ratio between 50% exclusive and 90% inclusive.

Although the CeZrR-type mixed oxide has an excellent particulate burning effect when Pr is used as the rare earth element as described above, even the Ce-Pr mixed oxide containing no Zr is advantageous in oxidizing CO in the exhaust gas and has a high particulate burning rate and high thermal resistance. In this respect, the Ce/(Ce+Pr) mole ratio of the Ce-Pr mixed oxide is preferably between 50% exclusive and 90% inclusive and more preferably between 60% and 90% both inclusive. Needless to say, a CePrR-type mixed oxide containing Ce, Pr and another rare earth element may be used instead of the Ce-Pr mixed oxide. Therefore, in this solution, even when a NOx trap catalyst is disposed in the exhaust passage upstream of the DPF, particulates on the DPF can be efficiently burned off.

Hence, like the fifth solution, the seventh solution is advantageous in improving fuel economy. Further, even when a NOx trap catalyst is disposed in the exhaust passage upstream of the DPF, particulates on the DPF can be efficiently burned off and the thermal resistance is improved. Therefore, the particulate burning performance can be maintained over a long period of time.

A catalytic metal may be carried on the above mixed oxide. A preferable catalytic metal used is a platinoid element such as Pt, Pd or Rh and Pt is particularly preferably used. The amount of catalytic metal carried is not particularly limited but may be approximately 2 mass% or less.

A ninth solution of the invention is characterized in that in the eighth solution, the mixed oxide further contains La and has a La/(Ce+Pr+La) mole ratio of 13% or less.

In this solution, La is used as the rare earth element R in the above CePrR-type mixed oxide. In this case, if the mixed oxide has a La/(Ce+Pr+La) mole ratio of 13% or less, this is advantageous in increasing the particulate burning rate.

### BRIEF DESCRIPTION OF THE DRAWINGS

Figure **1** is an exhaust gas purification system for a diesel engine.
Figure **2** is a front view schematically showing a DPF.
Figure **3** is a vertically cross-sectional view schematically showing the DPF.
Figure **4** is an enlarged cross-sectional view schematically showing a wall that separates an exhaust gas inflow channel from an exhaust gas outflow channel in the DPF.
Figure **5** is a graph showing the relation between Ce mole ratio and carbon burning rate for Pt/CeZrO and Pt/CePrO.
Figure **6** is a graph showing changes in carbon burning rate with temperature for various kinds of catalyst materials.
Figure **7** is a graph showing measurement results on CO adsorption peaks of the various kinds of catalyst materials using FT-IR.
Figure **8** is a graph showing the relation between La mole ratio and carbon burning rate for CeZrLaO and CePrLaO.
Figure **9** is a graph showing the relation between Nd mole ratio and carbon burning rate for CeZrNdO.

### DETAILED DESCRIPTION OF THE INVENTION

An embodiment of the present invention will be described in detail below with reference to the drawings.

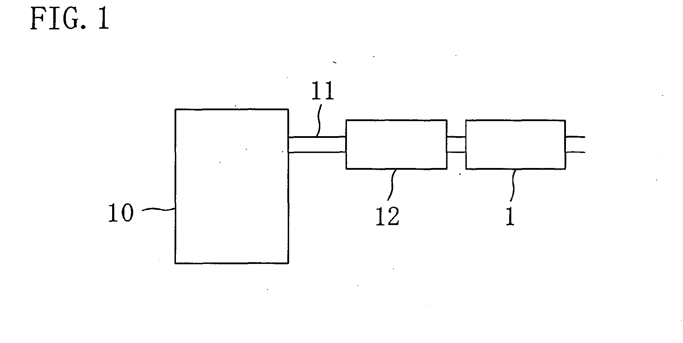

In Figure **1,** the reference numeral **1** denotes a DPF disposed in an exhaust passage **11** of a diesel engine **10.** An upstream catalyst **12** is disposed in part of the exhaust passage **11** located upstream of the DPF **1** in the flow direction of exhaust gas. A NOx trap catalyst, an oxidation catalyst or both can be disposed as the upstream catalyst **12.**

The NOx trap catalyst is obtained by carrying, on a support material such as active alumina, a NOx storage component (such as an alkali earth metal, typically Ba, or an alkali metal) for absorbing NOx in the exhaust gas at high oxygen concentrations in the exhaust gas (at lean air-fuel ratios) and a catalytic metal, such as Pt, for reducing NOx released from the NOx storage component when the oxygen concentration in the exhaust gas drops (at stoichiometric or rich air-fuel ratios).

The oxidation catalyst is obtained by carrying a catalytic metal, such as Pt or Pd, on a support material such as active alumina and acts to oxidize HC and CO in the exhaust gas. When the oxidation catalyst is disposed upstream of the DPF **1,** NO in the exhaust gas is oxidized into NO₂ by the oxidation catalyst and produced NO₂ is then supplied as an oxidizing agent for burning particulates to the DPF **1.**

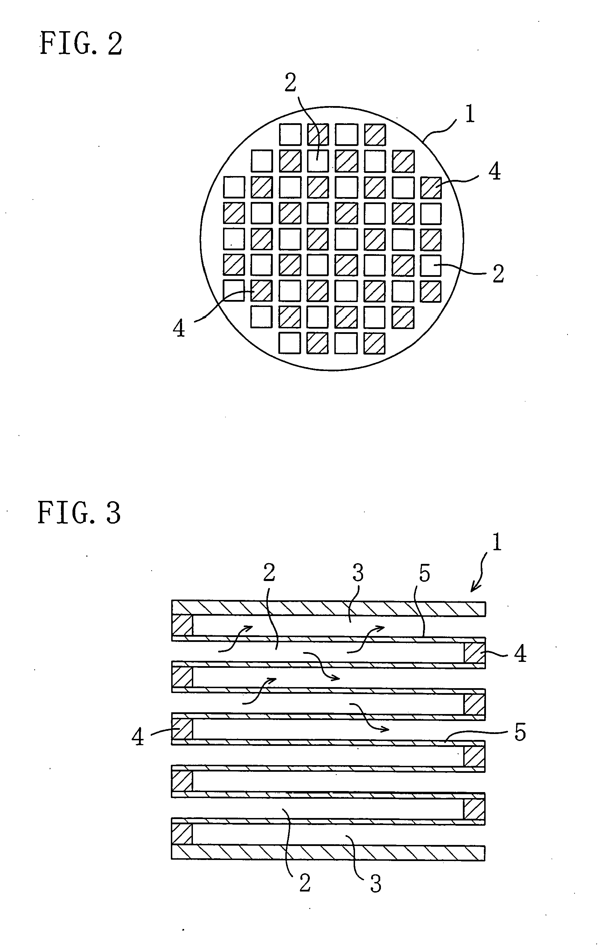

As schematically shown in Figures **2** and **3,** the DPF **1** has a honeycomb structure in which a large number of exhaust gas channels **2** and **3** run in parallel with each other. Specifically, the DPF **1** has a structure in which a plurality of exhaust gas inflow channels **2** and a plurality of exhaust gas outflow channels **3** are alternately arranged vertically and horizontally. Each exhaust gas inflow channel **2** is closed at the downstream end by a plug **4,** while each exhaust gas outflow channel **3** is closed at the upstream end by a plug **4.** The adjacent exhaust gas inflow and outflow channels **2** and **3** are separated from each other by a thin partition wall **5.** In Figure **2,** the hatched parts denote the plugs **4** at the upstream ends of the exhaust gas outflow channels **3.**

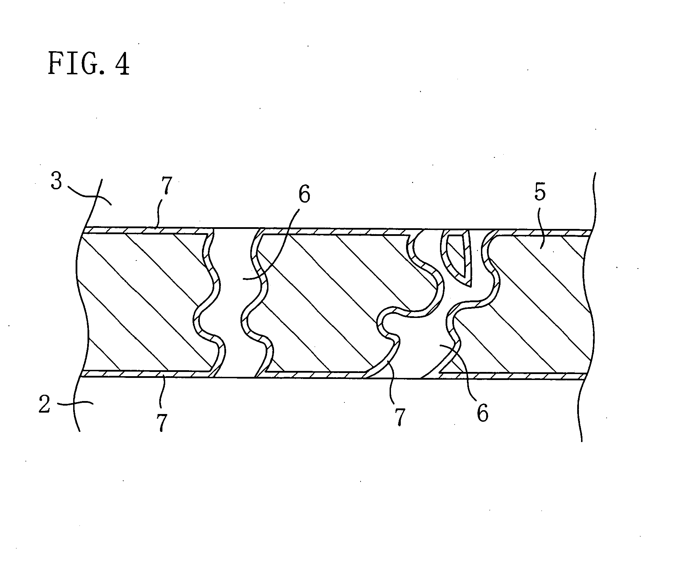

The body of the DPF **1** is formed of cordierite or an inorganic porous material, such as SiC, Si₃N₄ or sialon. The exhaust gas flowing into each exhaust gas inflow channel **2** flows out through the surrounding partition walls **5** into the adjacent exhaust gas outflow channels **3,** as shown in arrows in Figure **3.** More specifically, as shown in Figure **4,** each partition wall **5** is formed with micro pores (exhaust gas channels) **6** communicating the exhaust gas inflow channel **2** with the adjacent exhaust gas outflow channel **3** so that the exhaust gas flows through the micro pores **6.** Particulates are trapped and deposited mainly on the wall surfaces of the exhaust gas inflow channels 2 and the micro pores **6.**

A catalyst layer 7 containing a CeZrR-type mixed oxide, a Ce-Pr mixed oxide or a CePrR-type mixed oxide is formed on walls of all the exhaust gas channels (i.e., exhaust gas inflow channels **2,** exhaust gas outflow channels **3** and micro pores **6)** in the body of the DPF **1.** However, it is not necessarily required to form the catalyst layer on the walls of the exhaust gas outflow channels **3.**

The present invention will be described in detail below with reference to Examples and Comparative Examples for the DPF **1.**

### <Formulation of Ce/(Ce+Zr) mole ratio and Ce/(Ce+Pr) mole ratio>

Various kinds of CeZrO materials (mixed oxides containing Ce and Zr) having different Ce/(Ce+Zr) mole ratios were prepared by coprecipitation.

Specifically, cerous nitrate and zirconium oxynitrate were weighed to reach a predetermined mole ratio and dissolved in ion-exchange water, and the obtained mixed solution was stirred at room temperature for about an hour. Thereafter, the mixed solution was heated to 80°C and then mixed with 28% aqueous ammonia by adding the aqueous ammonia prepared in another beaker to the mixed solution at once while stirring strongly and rapidly with a glass bar. The white-turbid solution resulting from the mixture with aqueous ammonia was allowed to stand for a diel to produce a cake, and the cake was centrifuged and sufficiently rinsed in water. The water-rinsed cake was dried at approximately 150°C, and then calcined under the condition of keeping it at 400°C for five hours and then keeping it at 500°C for two hours. In this manner, various kinds of CeZrO mixed oxides having different mole ratios were obtained. Further, ZrO₂ having a mole ratio of 0% and CeO₂ having a mole ratio of 100% were also prepared.

A solution of diamminedinitro platinum nitrate was added to each of the above CeZrO mixed oxides of different mole ratios and ZrO₂ and CeO₂ so that 2 mass% of Pt was carried on each oxide, and ion-exchange water was further added to the solution and mixed. Thereafter, the mixed solution was evaporated to dryness to obtained a dried product. The resultant dried product was pounded in a mortar and then calcined by keeping it at 500°C for two hours. The obtained powder is hereinafter appropriately referred to as Pt/CeZrO.

Further, various kinds of CePrO materials (mixed oxides containing Ce and Pr) having different Ce/(Ce+Pr) mole ratios were prepared by coprecipitation like the CeZrO materials. Then, 2 mass% of Pt was carried on each of the mixed oxides by evaporation to dryness in the same manner. The obtained powder is hereinafter appropriately referred to as Pt/CePrO.

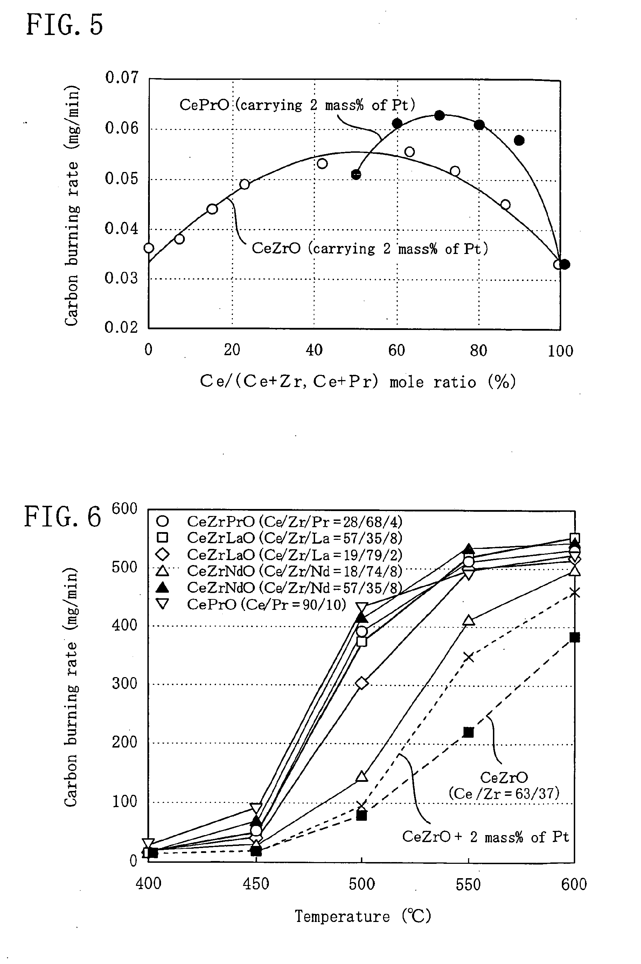

Each of the obtained powders of Pt/CeZrO mixed oxides and Pt/CePrO mixed oxides was aged by keeping it at 800°C in the normal atmosphere for 24 hours and mixed with 20 mass % of carbon as particulates, thereby obtaining an evaluation sample. Each evaluation sample was increased in temperature from room temperature at a rate of 10°C/min in a 10 vol%-oxygen gas flow and then measured in terms of the carbon burning rate when reached to 500°C. The measurement results are shown in Figure 5.

Referring first to CeZrO (carrying 2 mass% of Pt) in Figure 5, the carbon burning rate exhibits a peak at a Ce/(Ce+Zr) mole ratio between 50% and slightly over 60% and the lowest value at Ce/(Ce+Zr) mole ratios of 0% (i.e., ZrO₂) and 100% (i.e., CeO₂). These results show that the Ce/(Ce+Zr) mole ratio is preferably between 10% and 90% both inclusive, more preferably between 20% exclusive and 80% inclusive, and still more preferably between 40% and 80% both inclusive.

Referring next to CePrO (carrying 2 mass% of Pt), the carbon burning rate exhibits a peak in the vicinity of a Ce/(Ce+Pr) mole ratio of 70%. The results show that the Ce/(Ce+Pr) mole ratio is preferably between 50% exclusive and 90% inclusive.

### <CeZrR-type mixed oxide and Ce-Pr mixed oxide>

CeZrR-type mixed oxides according to Examples and Reference Examples were prepared in which a rare earth element R other than Ce was additionally mixed as a third component to a Ce-Zr mixed oxide. The CeZrR-type mixed oxides and a CePrO mixed oxide having a Ce/(Ce+Pr) mole ratio of 90% (Example of the present invention) were examined for the carbon burning rate when no catalytic metal was carried thereon, and compared with a CeZrO mixed oxide (carrying no catalytic metal) and another CeZrO mixed oxide (carrying 2 mass% of Pt) both of which are Comparative Examples.

The prepared CeZrR-type mixed oxides are CeZrPrO (Ce/Zr/Pr mole ratio = 28/68/4), CeZrLaO (Ce/Zr/La mole ratio = 57/35/8), CeZrLaO (Ce/Zr/La mole ratio = 19/79/2), CeZrNdO (Ce/Zr/Nd mole ratio = 18/74/8) and CeZrNdO (Ce/Zr/Nd mole ratio = 57/35/8). CeZrO (carrying no catalytic metal) and CeZrO (carrying 2 mass% of Pt) have a Ce/Zr mole ratio of 63/37.

Out of the CeZrR-type mixed oxides, CeZrPrO (Ce/Zr/Pr mole ratio = 28/68/4), CeZrLaO (Ce/Zr/La mole ratio = 57/35/8) and CeZrNdO (Ce/Zr/Nd mole ratio = 57/35/8) are Examples of the present invention and CeZrLaO (Ce/Zr/La mole ratio = 19/79/2) and CeZrNdO (Ce/Zr/Nd mole ratio = 18/74/8) are Reference Examples.

For the CeZrR-type mixed oxides, the CePrO mixed oxide, CeZrO (carrying no catalytic metal) and CeZrO (carrying 2 mass% of Pt), each of their sample powders was aged and measured in terms of the carbon burning rate in the same manner as in the case of Figure 5 except that the rate of temperature increase was 100°C/min and the measurement was carried out from 400°C to 600°C in steps of 50°C. The measurement results are shown in Figure 6.

A comparison between two Comparative Examples, i.e., CeZrO carrying no catalytic metal ("CeZrO (Ce/Zr = 63/37)") and CeZrO carrying 2 mass% of Pt ("CeZrO + 2mass% of Pt"), shows that the latter exhibited higher carbon burning rates at 500°C and more than the former. This effect was obtained by carrying Pt on CeZrO.

On the other hand, the five kinds of CeZrR-type mixed oxides and the CePrO mixed oxide (Example of the invention) have higher carbon burning rates at 450°C and higher temperatures than "CeZrO + 2mass% of Pt". The reason for the five kinds of CeZrR-type mixed oxides having higher carbon burning rates is that a rare earth element R was additionally mixed as a third component to the mixed oxides and the reason for CePrO having higher carbon burning rates is that Pr was additionally mixed to a CeO mixed oxide. CePrO exhibited high carbon burning rates particularly at low temperatures. Out of the CeZrR-type mixed oxides, Reference Examples, i.e., CeZrLaO (Ce/Zr/La mole ratio = 19/79/2) and CeZrNdO (Ce/Zr/Nd mole ratio = 18/74/8), have lower carbon burning rates than Examples of the invention. Out of two CeZrNdO mixed oxides, CeZrNdO having a higher Ce mole ratio exhibited better results.

Therefore, it can be said that if the catalyst layer of the DPF body contains a CeZrR-type mixed oxide in which a rare earth element other than Ce is additionally mixed as a third component to a Ce-Zr mixed oxide or contains a CePrO mixed oxide, the DPF can promptly burn off particulates at relatively low temperature even if the catalyst layer contains no catalytic metal.

### <Relation between CO oxidation reaction and carbon burning rate>

To find out the reason why the mixed oxides of Examples (CeZrR-type and CePrO mixed oxides) have higher carbon burning rates as described above, various kinds of catalyst materials were examined for CO oxidation reactivity.

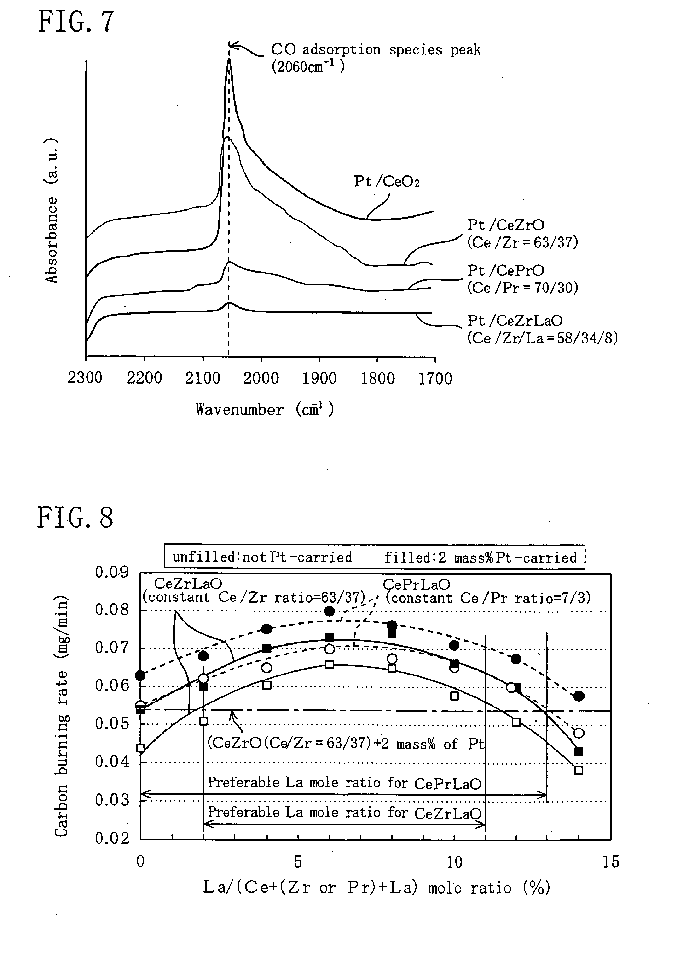

Specifically, 2 mass% of Pt was carried on each of CeO₂, CeZrO (Ce/Zr mole ratio = 63/37), CePrO (Ce/Pr mole ratio = 70/30) and CeZrLaO (Ce/Zr/La mole ratio = 58/34/8), thereby preparing Pt/CeO₂, Pt/CeZrO, Pt/CePrO and Pt/CeZrLaO as test materials for examination. Each of the test materials was increased in temperature up to 400°C in the normal atmosphere and then kept at 400°C in a gas flow containing 2 vol% of CO and 0.5 vol% of O₂ for a certain time. During the time, the molecular vibration spectra of molecules adsorbed on each test material were measured by Fourier transform infrared spectroscopy (FT-IR). The measurement results are shown in Figure 7.

In Figure 7, respective peaks in the vicinity of 2060 cm⁻¹ for the test materials are due to vibrations of CO molecules. A lower spectral peak means that adsorbed CO molecules are more likely to be desorbed and in turn CO is more likely to be oxidized.

Referring to Figure 7, Pt/CeO₂ has the highest CO adsorption peak and Pt/CeZrO, Pt/CePrO and Pt/CeZrLaO exhibit decreasing CO adsorption peaks in this order. As can be seen from the results, since Pt/CePrO and Pt/CeZrLaO of Examples of the invention have low CO adsorption peaks, they can easily oxidize CO. Therefore, one of the reasons why the mixed oxides of Examples have high carbon burning rates as shown in Figures 5 and 6 can be believed to be that they have high CO oxidation reactivity. In other words, it can be said that the oxidation reaction heat of CO contributes to the burning of carbons to increase the carbon burning rate.

### <Formulation of mole ratio of rare earth element R>

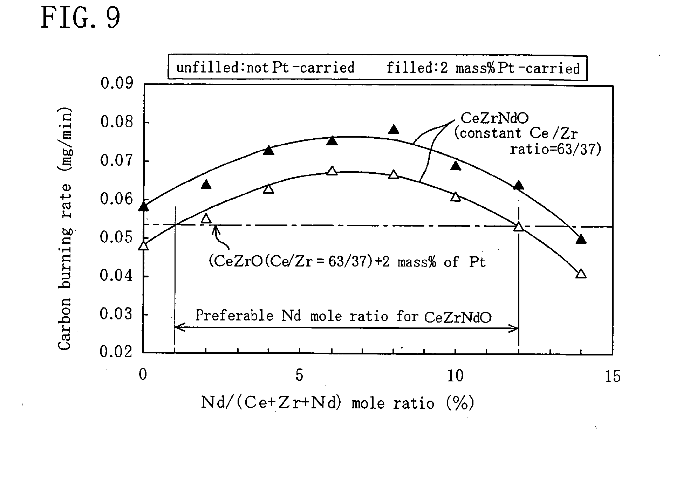

CeZrLaO (a constant Ce/Zr ratio of 63/37), CePrLaO (a constant Ce/Pr ratio of 7/3) and CeZrNdO (a constant Ce/Zr ratio of 63/37) were changed in the La/(Ce+Zr+La) mole ratio, the La/(Ce+Pr+La) mole ratio and the Nd/(Ce+Zr+Nd) mole ratio, respectively, from 0 to 14% in steps of 2%, thereby preparing various kinds of mixed oxides. For each mixed oxide, prepared were an evaluation sample on which 2 mass% of Pt was carried and an evaluation sample on which no catalytic metal was carried. The evaluation samples were aged as in the above manner and then measured in terms of the carbon burning rate. The measurement method is the same as described with reference to Figure 5. The measurement results for CeZrLaO and CePrLaO evaluation samples are shown in Figure 8 and the measurement results for CeZrNdO evaluation samples are shown in Figure 9.

CeZrLaO and CePrLaO evaluation samples had peak carbon burning rates in the vicinity of a La mole ratio of 6%, while CeZrNdO evaluation samples had peak carbon burning rates in the vicinity of a Nd mole ratio of 6%. In all evaluation samples, as the mole ratio increased, the carbon burning rate gradually increased and then gradually decreased. In all kinds of mixed oxides, the carbon burning rate was increased by carrying Pt on the mixed oxide. Out of the mixed oxides, CePrLaO exhibited better results than CeZrLaO and CeZrNdO exhibited an intermediate performance.

The dot-dashed line in Figures 8 and 9 indicates the carbon burning rate of Comparative Example in which 2 mass% of Pt was carried on CeZrO (Ce/Zr = 63/37). As seen from the comparison with Comparative Example, CeZrLaO can have higher carbon burning rates at La mole ratios between 2% and 11% both inclusive even if no Pt is carried thereon and, particularly, the carbon burning rate thereof preferably ranges from 4% to 10% both inclusive. CePrLaO can have higher carbon burning rates at La mole ratios of not more than 13% than Comparative Example even if no Pt is carried thereon and, particularly, the carbon burning rate thereof preferably ranges from 2% to 12% both inclusive. CeZrNdO can have higher carbon burning rates at Nd mole ratios between 1% and 12% both inclusive than Comparative Example even if no Pt is carried thereon and, particularly, the carbon burning rate thereof preferably ranges from 4% to 10% both inclusive.

The present invention is not limited to the embodiment as described above but includes various changes and modifications without departing from the spirit and scope of the invention defined by the following claims.

## Claims

1. A diesel particulate filter, disposed in an exhaust passage of an engine, for trapping particulates exhausted from the engine, wherein
walls forming exhaust gas channels in a filter body on which the particulates are trapped are coated with a catalyst layer for promoting the burning of the trapped particulates,
the catalyst layer contains a mixed oxide in which Ce and Zr are contained in a Ce/(Ce+Zr) mole ratio between 20% exclusive and 80% inclusive, and
the mixed oxide further contains a rare earth element R other than Ce.

2. The diesel particulate filter of claim 1, wherein the rare earth element R comprises at least one of La and Nd.

3. The diesel particulate filter of claim 1 or 2, wherein the mixed oxide has an R/(Ce+Zr+R) mole ratio between 2% and 11% both inclusive.

4. The diesel particulate filter of claim 1, wherein
the rare earth element R is La,
the mixed oxide has a La/(Ce+Zr+La) mole ratio between 2% and 11% both inclusive, and
a catalytic metal is carried in the range of 0 mass% to 2 mass% on the mixed oxide.

5. A diesel particulate filter, disposed in an exhaust passage of an engine, for trapping particulates exhausted from the engine, wherein
walls forming exhaust gas channels in a filter body on which the particulates are trapped are coated with a catalyst layer for promoting the burning of the trapped particulates,
the catalyst layer contains a mixed oxide in which Ce and Zr are contained in a Ce/(Ce+Zr) mole ratio between 10% exclusive and 90% inclusive, and
the mixed oxide further contains Pr.

6. The diesel particulate filter of claim 5, wherein the Ce/(Ce+Zr) mole ratio is between 20% exclusive and 11% inclusive.

7. The diesel particulate filter of claim 5 or 6, wherein the mixed oxide has a Pr/(Ce+Zr+Pr) mole ratio between 2% and 11% both inclusive.

8. A diesel particulate filter, disposed in an exhaust passage of an engine, for trapping particulates exhausted from the engine, wherein
walls forming exhaust gas channels in a filter body on which the particulates are trapped are coated with a catalyst layer for promoting the burning of the trapped particulates, and
the catalyst layer contains a mixed oxide in which Ce and Pr are contained in a Ce/(Ce+Pr) mole ratio between 50% exclusive and 90% inclusive.

9. The diesel particulate filter of claim 8, wherein the mixed oxide further contains La and has a La/(Ce+Pr+La) mole ratio of 13% or less.
